# FASCICULE DE BREVET EUROPEEN

(11) **EP 1 336 831 B1**
(45) Date de publication et mention de la délivrance du brevet: **30.04.2008**
(21) Numéro de dépôt: 03290358.5
(22) Date de dépôt: 14.02.2003
(51) Int. Cl.: G01M 3/28, G01M 3/22

(54) **Appareil de mesure du débit de fuite d'un dispositif d'étanchéité**
Vorrichtung zum Messen der Leckmenge einer abgedichteten Anordnung
Apparatus for measuring the amount of leakage of a sealed arrangement

(30) Priorité: 15.02.2002 FR 0201930
(43) Date de publication de la demande: 20.08.2003
(73) Titulaire: CENTRE NATIONAL D'ETUDES SPATIALES, F-75001 Paris (FR)
(72) Inventeur: Lasseux, Didier, 33610 Cestas Gazinet (FR); Marie, Christophe, 33140 Villenave d'Ornon (FR)
(74) Mandataire: Gaillarde, Frédéric F. Ch.

(56) Documents cités:
- DE-A- 19 652 514
- US-A- 5 375 453

## Description

La présente invention est relative à un procédé et un appareil de mesure du débit de fuite d'un dispositif d'étanchéité d'une enceinte sous pression d'un fluide et, plus particulièrement, à un tel appareil dans lequel ladite enceinte est délimitée par au moins deux pièces accolées et serrées l'une contre l'autre suivant deux surfaces en regard entourant l'enceinte et constituant ledit dispositif.

Les fluides, liquides ou gazeux, utilisés dans l'industrie sont couramment confinés dans des enceintes telles que des réservoirs ou des conduits, des tubes, etc...

De telles enceintes sont ordinairement constituées de plusieurs pièces assemblées de manière étanche. Un dispositif d'étanchéité "statique" est classiquement constitué par l'assemblage, sous serrage, de deux surfaces conformes appartenant chacune à l'une des deux pièces, avec ou sans interposition d'un joint en matériau souple, écrasé entre les deux surfaces.

Dans tous les cas, l'étanchéité est obtenue en assurant un contact sous pression entre deux surfaces en regard. La qualité de l'étanchéité obtenue dépend de plusieurs facteurs, notamment de la nature des matériaux assemblés et de l'intimité du contact établi par la mise en pression mécanique des surfaces en contact.

On connaît du document DE 196 52 514 un dispositif conforme au préambule de la revendication 1 ci-annexée.

Ce dispositif de la technique antérieure est tout particulièrement destiné à mesurer les fuites de gaz dans les zones de raccord de conduites.

Ce dispositif présente l'inconvénient de ne permettre de mesurer que des débits de fuites relativement importants.

On connaît de JP 10038743 un appareil de détection de fuite d'huile au niveau d'un joint. L'huile contenue dans un réservoir, permet de lubrifier un arbre en rotation. L'appareil de détection comporte un réservoir de stockage contenant un deuxième fluide, ledit réservoir est disposé de manière à recevoir les éventuelles fuites d'huile au niveau du joint. Un circuit et une pompe permettent de récupérer une partie du fluide pour détecter une éventuelle présence de ladite huile par fluorescence.

Ce dispositif présente l'inconvénient de ne permettre que la détection des éventuelles fuites d'huile et non la mesure du débit de ces fuites.

La présente invention a notamment pour but de fournir un procédé permettant de mesurer notamment des débits de fuites très faibles, voire infinitésimaux.

On atteint ce but de l'invention avec un procédé de mesure du débit de fuite d'un dispositif d'étanchéité selon la revendication 1.

La mise en circulation permanente et en boucle fermée du deuxième fluide permet de détecter un débit de fuite du premier fluide aussi faible que l'on veut : il suffit en effet de faire circuler le deuxième fluide suffisamment longtemps dans cette boucle pour que ce deuxième fluide se charge d'une quantité du premier fluide suffisamment importante pour pouvoir être mesurée avec des appareils de mesure classiques.

En outre, on peut adapter le volume de la boucle au débit de fuite du premier fluide, de manière à adapter l'ordre de grandeur de la concentration du premier fluide dans le second fluide à la sensibilité des appareils de mesure dont on dispose : on utilisera une boucle de faible volume pour un faible débit de fuite du premier fluide, et inversement.

La présente invention se rapporte aussi à un appareil de mesure du débit de fuite conforme à la revendication 2 ci-annexé.

Comme on le verra plus loin en détail, l'appareil suivant invention permet de récupérer simplement et commodément l'intégralité du fluide en fuite à travers le dispositif d'étanchéité et de mesurer avec précision le débit de fuite.

Ce dernier permet de caractériser l'efficacité du dispositif d'étanchéité, et ceci aussi bien vis-à-vis d'un liquide que d'un gaz.

Selon d'autres caractéristiques optionnelles de l'appareil selon l'invention:
- lesdits moyens de mesure comprennent des moyens de prélèvement d'un échantillon dudit deuxième fluide et des moyens d'analyse par chromatographie en phase gazeuse de la composition dudit échantillon, pour mesurer la quantité du premier fluide comprise dans le deuxième fluide,
- ledit échantillon contient une masse d'un étalon interne, dans un rapport de masse à celle dudit échantillon précisément déterminé,
- ledit appareil comprend des moyens pour mesurer l'effort de serrage des surfaces,
- ledit appareil comprend des moyens pour mesurer la pression du premier fluide,
- ladite enceinte est limitée par deux faces en regard desdites pièces entourées par lesdites surfaces en regard accolées de ces pièces,
- lesdites faces en regard sont délimitées par un contour fermé duquel déborde une nervure formée dans au moins une desdites pièces pour s'appuyer sous pression de serrage contre l'autre pièce,
- ladite nervure présente une section droite sensiblement rectangulaire,
- ledit appareil est thermostaté par des moyens de régulation de température,
- ledit appareil comprend des moyens pour observer la zone de contact entre les surfaces en regard desdites pièces.

D'autres caractéristiques et avantages de la présente invention apparaîtront à la lecture de la description qui va suivre et à l'examen du dessin annexé dans lequel :
- la figure 1 est une représentation schématique de appareil suivant l'invention,
- la figure 2 est une vue en coupe axiale d'une partie essentielle de l'appareil de la figure 1,
- la figure 3 est une vue en coupe axiale d'un mode de réalisation particulier d'une des pièces qui délimite l'enceinte de l'appareil suivant l'invention, et
- les figures 4 à 6 sont des graphes illustrant les mesures réalisables à l'aide de l'appareil suivant l'invention.

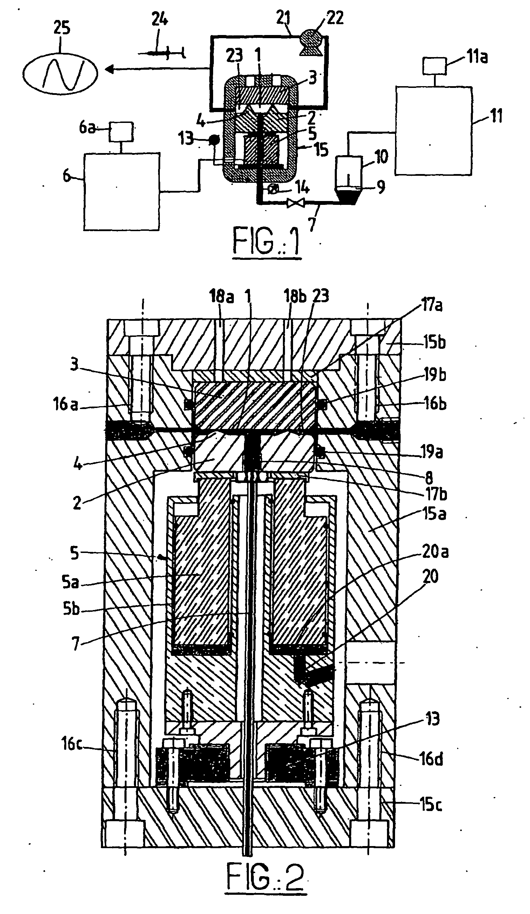

On se réfère aux figures 1 et 2 du dessin annexé où il apparaît que le coeur de l'appareil de mesure représenté est constitué par une enceinte 1 délimitée essentiellement par deux pièces 2 et 3, généralement cylindriques et coaxiales, accolées suivant deux faces en regard, comme représenté en plus de détails à la figure 2. Une nervure 4 à contour fermé déborde de l'une des deux pièces 2, 3 (de la pièce 2 dans le mode de réalisation représenté aux figures 1 et 2) pour s'appuyer sur l'autre pièce, en définissant ainsi deux surfaces de contact en regard entourant l'enceinte 1.

Les pièces 2 et 3 sont pressées l'une contre l'autre par des moyens de serrage constitués, par exemple, par un vérin 5 représenté en plus de détail à la figure 2. Le vérin 5 est alimenté par une source de fluide sous pression 6 associée à des moyens classiques 6a de réglage de la pression du fluide délivré au vérin, et donc de l'effort de serrage des surfaces de contact en regard précitées.

L'enceinte 1, de section droite aplatie comme représenté à la figure 2, est elle-même remplie d'un fluide venu par une conduite 7 traversant axialement le vérin 5 pour communiquer avec un trou axial 8 percé dans la pièce 2 et débouchant dans l'enceinte. Ce fluide est mis en pression dans la conduite 7 par tout moyen connu, par exemple au moyen d'un piston 9 interposé, dans un cylindre 10, entre la conduite 7 et une source 11 d'un fluide sous pression, un gaz de préférence, ladite source étant associée à des moyens 11 a permettant de faire varier la pression du gaz qu'elle délivre, et donc celle du fluide contenu dans l'enceinte 1, ce fluide étant, par exemple, un liquide. On comprend que le piston 9 établit une isolation physique entre le fluide contenu dans la conduite 7 et celui délivré par la source 11, l'un pouvant ainsi être un liquide et l'autre un gaz.

Un capteur 13 sensible à l'effort exercé par le vérin 5 sur la pièce 2 et un capteur de pression 14 sensible à la pression du fluide alimentant l'enceinte 1 permettent, en liaison avec les moyens 6a et 11a, respectivement, le réglage des pressions de fluide délivrées par les sources 6 et 11, respectivement, à des valeurs prédéterminées choisies.

Comme représenté aux figures 1 et 2, les pièces 2, 3 et le vérin 5 sont empilés coaxialement dans un même bâti 15 comprenant une partie cylindre 15a et deux embouts 15b et 15c retenus chacun contre une base de la partie cylindrique 15a par des vis complémentaires de filetages axiaux 16a, 16b et 16c, 16d, respectivement.

Les pièces 2, 3 sont pincées entre l'embout 15b et le vérin 5, avec interposition de rondelles 17a, 17b, en Téflon (marque déposée) par exemple. Des lumières 18a, 18b peuvent être percées dans l'embout 15b et la rondelle 17a au niveau de la nervure 4 pour permettre l'observation directe du contact entre les pièces 2 et 3, quand la pièce 3 est en un matériau transparent.

Des joints d'étanchéité annulaires 19a, 19b sont montés dans la partie cylindrique 15a du bâti 15 au niveau des pièces 2 et 3 respectivement, pour un but que l'on expliquera plus loin.

Le vérin 5 comprend un noyau 5a mobile axialement dans un carter 5b. L'extrémité du noyau 5a qui sort du carter 5b s'appuie sur la rondelle 17b sous la pression du fluide de la source 6 qui entre par un conduit 20 dans une chambre étanche 20a baignant autre extrémité du noyau 5a.

Comme cela est bien visible sur la figure 2, le noyau 5a et le carter 5b sont percés de trous axiaux respectifs dans lesquels passe la conduite 7 du fluide venu de la source 11 pour remplir l'enceinte 1, à travers le trou axial 8 percé dans la pièce 2.

Le capteur d'effort 13 prend la forme d'une rondelle montée sur le fond du bâti 15, entre celui-ci et le carter 5b du vérin 5, de manière à être sensible à la réaction du noyau 5a à la pression de fluide régnant dans l'enceinte 1. Il peut être constitué par un pont de jauges extensométriques, ou par une rondelle en matériau piézoélectrique, par exemple. Le signal délivré par le capteur 13 permet, en liaison avec les moyens de réglage 6a, de régler la pression du fluide fourni par la source 6 au vérin 5, et donc l'effort de serrage appliqué aux pièces 2, 3.

On comprend que l'enceinte 1 ne retient le fluide sous pression qu'elle contient que dans la mesure où ce fluide ne fuit pas par l'interface des pièces 2 et 3.

Cet interface simule ainsi un dispositif d'étanchéité "statique" classique constitué par la mise en contact sous pression de deux surfaces. Il peut être dessiné de manière à simuler une grande variété de tels dispositifs, constitués par une pièce comportant une réplique d'un joint s'appuyant sur une pièce libre, comme représenté aux figures 1 et 2, par un ensemble joint/bride, etc....

L'efficacité d'un tel dispositif est fonction de divers paramètres tels que la pression du fluide contenu dans l'enceinte à étancher, l'effort de serrage appliqué aux surfaces, la porosité des matériaux constituant les pièces 2 et 3, la rugosité des surfaces de contact, la température ambiante, etc....

A cet égard, l'appareil suivant invention pourrait être dûment thermostaté par tout moyen convenable, de manière que sa température, et notamment celle du fluide de l'enceinte, puisse être réglée à une valeur prédéterminée.

L'efficacité du dispositif d'étanchéité peut être mesurée par le débit de fluide du dispositif, soit la fraction du fluide sous pression contenu dans l'enceinte 1 qui est susceptible de sortir de cette enceinte en passant entre les deux surfaces en contact serré de la pièce 3 et de la nervure 4 de la pièce 2.

Pour ce faire, l'appareil suivant l'invention comprend des moyens d'introduction de cette fraction du fluide dans un deuxième fluide circulant en boucle fermée dans un circuit 21 (voir figure 1) grâce à une pompe 22.

Pour collecter le fluide en fuite, le circuit 21 passe par une chambre 23 qui s'étend autour de l'enceinte 1, cette chambre présentant alors un contour qui suit celui de la nervure 4, un contour annulaire par exemple. Les joints d'étanchéité annulaires 19a, 19b empêchent une fuite du deuxième fluide par la périphérie des pièces 2, 3.

On comprend qu'ainsi toute fraction du "premier" fluide sortant de l'enceinte 1 s'incorpore au deuxième fluide circulant dans le circuit 21.

Du fait de sa circulation en circuit fermé, le deuxième fluide assure un balayage de la chambre 23, c'est-à-dire une circulation permanente dans cette chambre, permettant de charger progressivement le deuxième fluide d'une quantité mesurable du premier fluide.

Pour quantifier l'importance de la fuite dans le temps, c'est-à-dire le débit de fuite, l'appareil suivant l'invention comprend des moyens 24, 25 de mesure de la quantité du premier fluide qui s'incorpore progressivement au deuxième fluide.

A titre d'exemple illustratif et non limitatif seulement, ces moyens comprennent des moyens de prélèvement d'échantillons du deuxième fluide, constitués par une seringue classique par exemple, et des moyens 25 d'analyse de la composition de cet échantillon.

Avantageusement, suivant la présente invention, ces moyens d'analyse fonctionnent par chromatographie en phase gazeuse, avec détecteur à ionisation de flamme, méthode précise, peu coûteuse et rapide.

Pour améliorer encore la précision des mesures réalisées, on incorpore au deuxième fluide (de balayage) un étalon interne pour les raisons explicitées ci-dessous.

Supposons que les premier et deuxième fluides soient respectivement du butanol et de l'éthanol. Il s'agit donc de mesurer une masse de butanol introduite par fuite dans l'éthanol du circuit 21. La mesure de cette masse par chromatographie en phase gazeuse repose sur la détection de signaux, électriques par exemple, proportionnels à la masse de butanol comprise dans l'échantillon de fluide prélevé dans le circuit 21, constitué par un mélange d'éthanol et de butanol. Cette masse dépend de celle de l'échantillon et donc du volume de liquide prélevé pour constituer cet échantillon. Toute erreur sur la mesure de ce volume pénalise en conséquence la précision de la mesure recherchée.

Pour surmonter cet inconvénient, avant de charger le circuit 21 en éthanol, on introduit dans un grand volume d'éthanol une masse précise d'un "étalon interne" constitué, par exemple, par du propanol. Le volume d'éthanol utilisé est grand pour que l'on puisse connaître avec une grande précision le rapport de la masse d'étalon à la masse d'éthanol.

La mesure de la masse de butanol introduite par fuite dans l'échantillon prélevé se fait alors par rapport à la masse d'étalon (propanol) contenu dans cet échantillon, ce qui rend la mesure indépendante du volume de l'échantillon prélevé.

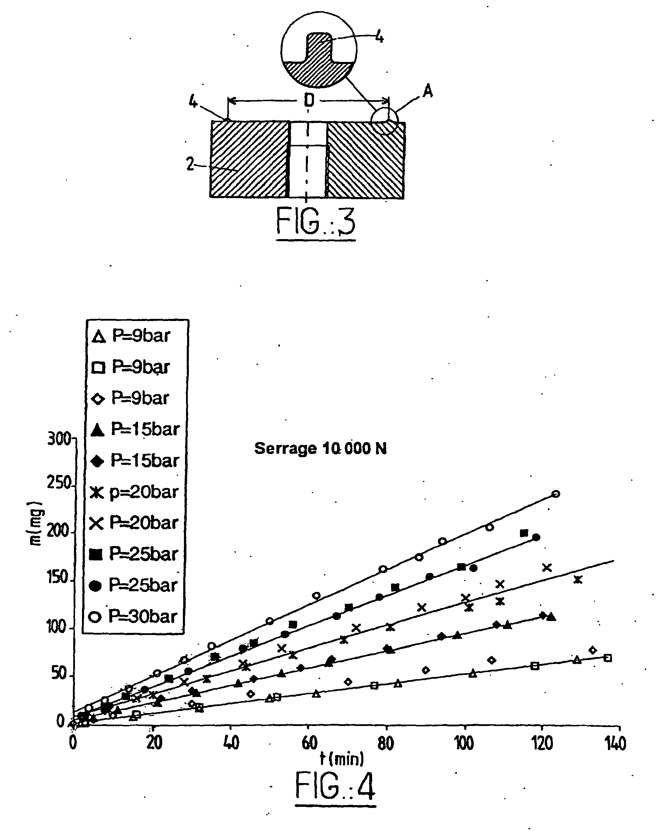

On va maintenant décrire un exemple de résultats de mesures obtenus à l'aide de l'appareil suivant la présente invention, en se référant à la figure 3 du dessin annexé et aux graphes des figures 4 à 6.

Dans cet exemple la pièce 2, "éprouvette", est telle que représentée en coupe axiale à la figure 3, avec agrandissement du détail A. Ce détail représente la section transversale de la nervure 4, de forme sensiblement rectangulaire.

Les surfaces en contact des pièces 2 et 3 prennent alors chacune la forme d'une couronne circulaire de diamètre moyen D=40 mm, avec un diamètre interne de 39,7 mm et un diamètre externe de 40,3 mm. Avantageusement, comme on l'a vu plus haut, la pièce 3 est formée à partir d'une pièce transparente, une lame en saphir de 20 mm d'épaisseur par exemple, pour permettre une surveillance visuelle des fuites au niveau de la nervure 4, à travers les lumières 18a, 18b.

La nervure 4 est elle-même usinée dans une pièce 2 en acier 316L, de rugosité Ra=0,15µm.

On prépare l'appareil à une séance de mesures en réalisant successivement les opérations suivantes, après avoir monté les pièces 2 et 3 dans le bâti 15, au-dessus du vérin 5 :
- mise en charge de l'appareil par activation des moyens de serrage 5, 6, 6a,
- mise en circulation d'un solvant (éthanol) dans le circuit 21, ce circuit contenant environ 25 cl d'éthanol et d'étalon interne, par exemple du propanol, à raison de 2% en masse.
- mise en pression du fluide (soluté) contenu dans enceinte 1, à l'aide des moyens 9, 10, 11, 11a.

L'appareil est thermostaté à 20°C par des moyens de régulation en température (non représentés).

On opère ensuite régulièrement des prélèvements d'échantillons (de l'ordre de 1µl) du solvant qui balaie la chambre 23, et on dose ensuite la quantité du soluté contenu dans le solvant, selon la méthode de l'étalon interne décrite ci-dessus, dont la précision est meilleure que 5%.

L'analyse de l'échantillon par chromatographie en phase gazeuse est réalisée à l'aide d'une colonne capillaire et d'un détecteur à ionisation de flamme, comme on l'a vu plus haut. Ce procédé d'analyse présente une très bonne sensibilité et une bonne linéarité. Il exige cependant l'utilisation de composés inflammables.

Les mesures réalisées permettent de dresser les graphes des figures 4, 5 et 6 qui illustrent respectivement :
- l'évolution de la masse m de soluté dans le solvant en fonction du temps, sous un effort de serrage de 10.000 N, pour diverses valeurs de la pression du soluté,
- l'évolution du débit massique Q de fuite en fonction de cette pression, pour diverses valeurs de l'effort de serrage appliqué (de 10kN à 30kN), et
- l'évolution du débit massique Q en fonction de l'effort de serrage exercé.

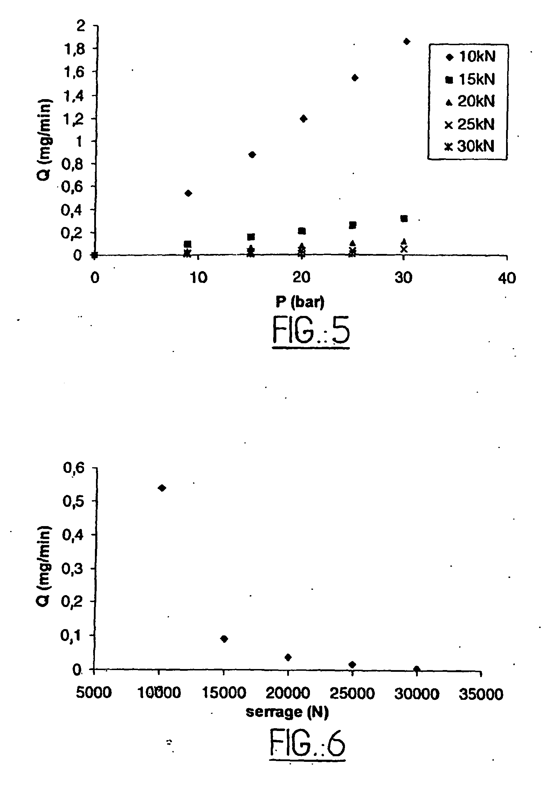

On constate que la masse de soluté m passant dans le solvant croit linéairement avec le temps (figure 4) et croit avec la pression du soluté, que le débit massique Q croit linéairement avec la pression du soluté (figure 5) et décroît non linéairement quand l'effort de serrage croit (figure 6).

Les graphes des figures 4 à 6 permettent ainsi de caractériser les performances d'un dispositif d'étanchéité réel, à l'aide des pièces 2, 3 et de l'appareil de mesure suivant l'invention, ce dernier présentant bien les caractéristiques de simplicité, de précision et de faible coût annoncées en préambule de la présente description. Il est en outre universel, étant utilisable tant avec des liquides qu'avec des gaz.

Dans le cas d'un gaz l'ensemble piston 9/cylindre 10 peut être supprimé car le gaz peut se substituer aux moyens 11, 11a qui assurent, dans le cas où le fluide contenu dans l'enceinte 1 est un liquide, la mise en pression de ce liquide.

Bien entendu, l'invention n'est pas limitée au mode de réalisation décrit et représenté, qui n'a été donné qu'à titre d'exemple.

C'est ainsi que les pièces 2 et 3 du dispositif d'étanchéité mesuré dans l'appareil suivant l'invention, peuvent prendre des formes autres que celles représentées, selon l'application recherchée, par exemple celles d'un ensemble joint-bride ou celles d'une pièce comportant la réplique d'un joint, mis en appui sur une autre pièce, lisse.

## Revendications

1. Procédé de mesure du débit de fuite d'un dispositif d'étanchéité simulé d'une enceinte (1) sous pression d'un premier fluide en vue de caractériser son efficacité, ladite enceinte (1) étant délimitée par au moins deux pièces (2, 3) accolées et serrées l'une contre l'autre suivant deux surfaces en regard entourant ladite enceinte (1) et constituant ledit dispositif, une fraction dudit premier fluide sous pression étant susceptible de sortir de ladite enceinte (1) en passant entre lesdites surfaces et de s'incorporer alors à un deuxième fluide, **caractérisé en que** le procédé comprend les étapes suivantes:
- mise en charge dudit dispositif par activation de moyens de serrage (5, 6, 6a) des deux dites pièces (2, 3)délimitant ladite enceinte ;
- mise en circulation permanente et en boucle fermée dudit deuxième fluide, dans un circuit passant par une chambre s'étendant autour de l'enceinte, ladite chambre présentant un contour qui suit celui des surfaces en contact des deux dites pièces (2, 3), de manière à collecter progressivement une quantité mesurable du premier fluide,
- mise en pression dudit premier fluide contenu dans ladite enceinte (1) par variation de ladite pression dudit premier fluide
- mesure de la quantité dudit premier fluide collectée par ledit deuxième fluide.

2. Appareil de mesure du débit de fuite d'un dispositif d'étanchéité simulé d'une enceinte (1) sous pression d'un premier fluide servant à caractériser son efficacité, ladite enceinte (1) étant délimitée par au moins deux pièces (2, 3) accolées et serrées l'une contre l'autre suivant deux surfaces en regard entourant ladite enceinte (1) et constituant ledit dispositif, une fraction dudit premier fluide sous pression étant susceptible de sortir de ladite enceinte (1) en passant entre lesdites surfaces, cet appareil comprenant a) des moyens (21, 22, 23) pour introduire ladite fraction dudit premier fluide dans un deuxième fluide et b) des moyens (24. 25) pour mesurer la quantité dudit premier fluide collectée par ledit deuxième fluide,
**caractérisé en ce que** l'appareil comporte des moyens de serrage réglables (5, 6, 6a) des deux dites pièces (2, 3) et des moyens de mise sous pression (9, 10, 11, 11a) dudit premier fluide dans ladite enceinte, lesdits moyens de mise sous pression (9, 10, 11, 11a) permettant de faire varier ladite pression dudit premier fluide dans ladite enceinte (1),
et **caractérisé en ce que** lesdits moyens d'introduction (21, 22, 23) assurent une circulation en boucle fermée dudit deuxième fluide et comportent une chambre (23) s'étendant autour de l'enceinte (1) et présentant un contour suivant lesdites surfaces en regard entourant ladite enceinte (1), de manière à assurer un balayage propre à collecter ladite fraction dudit premier fluide.

3. Appareil conforme à la revendication 2, **caractérisé en ce que** lesdits moyens de mesure (24, 25) comprennent des moyens (24) de prélèvement d'un échantillon dudit deuxième fluide et des moyens d'analyse (25) par chromatographie en phase gazeuse de la composition dudit échantillon, pour mesurer la quantité du premier fluide comprise dans le deuxième fluide.

4. Appareil conforme à la revendication 3, **caractérisé en ce que** ledit échantillon contient une masse d'un étalon interne, dans un rapport de masse à celle dudit échantillon précisément déterminé.

5. Appareil conforme à l'une quelconque des revendications 2 à 4, **caractérisé en ce qu'**il comprend des moyens (8, 6a) pour faire varier l'effort de serrage desdites surfaces et des moyens (13) pour mesurer ledit effort.

6. Appareil conforme à l'une quelconque des revendications 2 à 5, **caractérisé en ce qu'**il comprend des moyens (14) pour mesurer la pression dudit premier fluide dans ladite enceinte.

7. Appareil conforme à l'une quelconque des revendications 2 à 6, **caractérisé en ce que** ladite enceinte (1) est limitée par deux faces en regard desdites pièces (2, 3), entourées par lesdites surfaces en regard accolées de ces pièces.

8. Appareil conforme à la revendication 7, **caractérisé en ce que** lesdites faces en regard sont délimitées par un contour fermé duquel déborde une nervure (4) formée dans au moins une desdites pièces (2, 3) pour s'appuyer sous pression de serrage contre l'autre pièce.

9. Appareil conforme à la revendication 8, **caractérisé en ce que** ladite nervure (4) présente une section droite sensiblement rectangulaire.

10. Appareil conforme à l'une quelconque des revendications 2 à 9, **caractérisé en ce qu'**il est thermostaté par des moyens de régulation de température.

11. Appareil conforme à l'une quelconque des revendications 2 à 10, **caractérisé en ce qu'**il comprend des moyens (18a, 18b) pour observer la zone de contact entre les surfaces en regard desdites pièces (2, 3).

## Claims

1. Process for measuring the leakage-rate of a simulated sealing device of an enclosure (1) under pressure of a first fluid with a view to characterising its efficiency, said enclosure (1) being delimited by at least two coupled components (2, 3) clamped against one another along two opposite surfaces surrounding said enclosure (1) and constituting said device, a fraction of said first fluid under pressure being capable of leaving said enclosure (1) by passing between said surfaces, and of then being mixed with a second fluid, **characterised in that** the process includes the following steps:
- loading said device by activation of means (5, 6, 6a) for clamping the two said components (2, 3) delimiting said enclosure,
- permanent circulation in a closed loop of said second fluid in a circuit passing through a chamber extending around the enclosure, said chamber exhibiting a contour following that of the surfaces in contact of the two said components (2, 3), in such a way as to collect progressively a measurable quantity of the first fluid,
- pressurising said first fluid contained in said enclosure (1) by variation of said pressure of said first fluid,
- measuring the quantity of said first fluid collected by said second fluid.

2. Apparatus for measuring the leakage-rate of a simulated sealing device of an enclosure (1) under pressure of a first fluid serving to characterise its efficiency, said enclosure (1) being delimited by at least two coupled components (2, 3) clamped against one another along two opposite surfaces surrounding said enclosure (1) and constituting said device, a fraction of said first fluid under pressure being capable of leaving said enclosure (1) by passing between said surfaces, this apparatus including a) means (21, 22, 23) for introducing said fraction of said first fluid into a second fluid and b) means (24, 25) for measuring the quantity of said fluid collected by said second fluid, **characterised in that** the apparatus includes adjustable means (5, 6, 6a) for clamping the two said components (2, 3) and means for pressurising (9, 10, 11, 11a) said first fluid in said enclosure, said pressurising means (9, 10, 11, 11a) enabling said pressure of said first fluid in said enclosure (1) to be varied, and **characterised in that** said introduction means (21, 22, 23) ensure a circulation in a closed loop of said second fluid and include a chamber (23) extending around the enclosure (1) and exhibiting a contour following said opposing surfaces surrounding said enclosure (1) in such a way as to ensure a scavenging that is suitable for collecting said fraction of said first fluid.

3. Apparatus according to one of Claims 1 or 2, **characterised in that** said measuring means (24, 25) include means (24) for taking a sample of said second fluid and means for analysis (25) by gas chromatography of the composition of said sample in order to measure the quantity of the fluid first contained in the second fluid.

4. Apparatus according to Claim 3, **characterised in that** said sample contains a mass of an internal standard in a precisely determined mass ratio to that of said sample.

5. Apparatus according to any one of Claims 2 to 4, **characterised in that** it includes means (6, 6a) for varying the clamping tension of said surfaces and means (13) for measuring said tension.

6. Apparatus according to any one of Claims 2 to 5, **characterised in that** it includes means (14) for measuring the pressure of said first fluid in said enclosure.

7. Apparatus according to any one of Claims 2 to 6, **characterised in that** said enclosure (1) is delimited by two opposite faces of said components (2, 3) surrounded by said coupled opposite surfaces of these components.

8. Apparatus according to Claim 7, **characterised in that** said opposite faces are delimited by a closed contour from which there projects a rib (4) which is formed in at least one of said components (2, 3) in order to be supported against the other component under clamping pressure.

9. Apparatus according to Claim 8, **characterised in that** said rib (4) exhibits an approximately rectangular cross-section.

10. Apparatus according to any one of Claims 2 to 9, **characterised in that** it is thermostatically controlled by means for temperature regulation.

11. Apparatus according to any one of Claims 2 to 10, **characterised in that** it includes means (18a, 18b) for observing the zone of contact between the opposite surfaces of said components (2, 3).

## Patentansprüche

1. Verfahren zum Messen der Leckmenge einer simulierten Dichtvorrichtung eines Raumes (1), der mit dem Druck eines ersten Fluids beaufschlagt ist, um ihre Wirksamkeit zu bestimmen, wobei der Raum (1) durch mindestens zwei entlang einander zugewandten Flächen aneinandergesetzte und gegeneinander verspannte Teile (2, 3) begrenzt ist, welche den Raum (1) umgeben und die Vorrichtung bilden, wobei ein Bruchteil des ersten druckbeaufschlagten Fluids aus dem Raum (1) austreten kann, indem es zwischen den Flächen hindurchtritt und somit Teil eines zweiten Fluids wird, **dadurch gekennzeichnet, dass** das Verfahren die folgenden Schritte umfasst:
- Belasten der Vorrichtung durch Aktivieren von Spanneinrichtungen (5, 6, 6a) der beiden genannten, den Raum (1) begrenzenden Teile (2, 3);
- permanentes und in einer geschlossenen Schleife erfolgendes Zirkulierenlassen des zweiten Fluids in einem Kreislauf, der durch eine den Raum umgebende Kammer verläuft, wobei die Kammer eine Kontur aufweist, welche derjenigen der einander berührenden Flächen der beiden genannten Teile (2, 3) folgt, um fortschreitend eine messbare Menge des ersten Fluids zu sammeln,
- Druckbeaufschlagen des in dem Raum (1) enthaltenen ersten Fluids durch Verändern des Drucks des ersten Fluids,
- Messen der von dem zweiten Fluid gesammelten Menge des ersten Fluids.

2. Gerät zum Messen der Leckmenge einer simulierten Dichtvorrichtung eines Raumes (1), der mit dem Druck eines ersten Fluids beaufschlagt ist, welches der Bestimmung ihrer Wirksamkeit dient, wobei der Raum (1) durch mindestens zwei entlang einander zugewandten Flächen aneinandergesetzte und gegeneinander verspannte Teile (2, 3) begrenzt ist, welche den Raum (1) umgeben und die Vorrichtung bilden, wobei ein Bruchteil des ersten druckbeaufschlagten Fluids aus dem Raum (1) austreten kann, wobei das Gerät a) Einrichtungen (21, 22, 23) zum Einleiten des Bruchteils des ersten Fluids in ein zweites Fluid und b) Einrichtungen (24, 25) zum Messen der Menge des von dem zweiten Fluid gesammelten ersten Fluids aufweist,
**dadurch gekennzeichnet, dass**
- das Gerät Einrichtungen (5, 6, 6a) zum einstellbaren Spannen der beiden genannten Teile (2, 3) und Einrichtungen (9, 10, 11, 11a) zum Druckbeaufschlagen des in dem Raum befindlichen ersten Fluids aufweist, wobei die Druckbeaufschlagungseinrichtungen (9, 10, 11, 11a) das Ändern des Drucks des ersten Fluids in dm Raum (1) ermöglichen,
- und **dadurch gekennzeichnet, dass** die Einleiteinrichtungen (21, 22, 23) ein Umlaufen des zweiten Fluids in einer geschlossenen Schleife gewährleisten und eine Kammer (23) umfassen, welche sich um den Raum (1) erstreckt und eine Kontur aufweist, welche den einander zugewandten Flächen folgt, die den Raum (1) umschließen, um ein Spülen zu gewährleisten, das für das Sammeln des Bruchteils des ersten Fluids geeignet ist.

3. Gerät nach einem der Ansprüche 1 oder 2, **dadurch gekennzeichnet, dass** die Messeinrichtungen (24, 25) Einrichtungen (24) zum Entnehmen einer Probe des zweiten Fluids und Einrichtungen (25) zur gaschromatographischen Analyse der Zusammensetzung der Probe aufweisen, um die in dem zweiten Fluid enthaltene Menge des ersten Fluids zu messen.

4. Gerät nach Anspruch 3, **dadurch gekennzeichnet, dass** die genannte Probe eine innere Prüfmasse enthält, die in einem genau festgelegten Massenverhältnis zu derjenigen der Probe steht.

5. Gerät nach einem der Ansprüche 2 bis 4, **dadurch gekennzeichnet, dass** es Einrichtungen (6, 6a) zum Verändern der Klemmkraft der genannten Flächen und Einrichtungen (13) zum Messen dieser Kraft aufweist.

6. Gerät nach einem der Ansprüche 2 bis 5, **dadurch gekennzeichnet, dass** es Einrichtungen (14) zum Messen des Drucks des ersten Fluids in dem Raum aufweist.

7. Gerät nach einem der Ansprüche 2 bis 6, **dadurch gekennzeichnet, dass** der Raum (1) durch zwei einander zugewandte Flächen der genannten Teile (2, 3) begrenzt ist, welche von den einander zugewandten, aneinandergesetzten Flächen dieser Teile umgeben sind.

8. Gerät nach Anspruch 7, **dadurch gekennzeichnet, dass** die einander zugewandten Flächen durch eine geschlossene Kontur begrenzt sind, von der eine an mindestens einem der genannten Teile (2, 3) ausgebildete Rippe (4) absteht, um sich unter dem Klemmdruck an dem anderen Teil abzustützen.

9. Gerät nach Anspruch 8, **dadurch gekennzeichnet, dass** die genannte Rippe (4) einen im wesentlichen rechteckigen Querschnitt hat.

10. Gerät nach einem der Ansprüche 2 bis 9, **dadurch gekennzeichnet, dass** es durch Temperaturregeleinrichtungen temperiert ist.

11. Gerät nach einem der Ansprüche 2 bis 10, **dadurch gekennzeichnet, dass** Einrichtungen (18a, 18b) zum Beobachten der Kontaktzone zwischen den zugewandten Flächen der genannten Teile (2, 3) aufweist.
